(19) Europäisches Patentamt

European Patent Office

Office européen des brevets

(11) **EP 0 844 273 A2**

(12) **EUROPÄISCHE PATENTANMELDUNG**

(43) Veröffentlichungstag:
27.05.1998 Patentblatt 1998/22

(21) Anmeldenummer: 97120649.5

(22) Anmeldetag: 25.11.1997

(51) Int. Cl.$^6$: **C08J 9/28**, C08J 9/30, C08J 9/00
// C08L21:00

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 26.11.1996 DE 19648959

(71) Anmelder:
BASF AKTIENGESELLSCHAFT
67056 Ludwigshafen (DE)

(72) Erfinder:
• van der Most, Bernard
67373 Dudenhofen (DE)
• Wietsma, Popke
67063 Ludwigshafen (DE)

(74) Vertreter:
Kinzebach, Werner, Dr. et al
Patentanwälte
Reitstötter, Kinzebach und Partner
Postfach 86 06 49
81633 München (DE)

(54) **Glimmwidriger Schaumgummi, Verfahren zu seiner Herstellung und seine Verwendung**

(57) Die Erfindung umfasst glimmwidrigen Schaumgummi, der durch Zugabe eines die Grenzfläche Gas/flüssiges Dispergiermedium destabilisierenden Mittels in einer Menge von < 100 ppm während des Herstellungsprozesses erhältlich ist, Formteile, insbesondere Matratzen, aus glimmwidrigem Schaumgummi, Verfahren zur Herstellung glimmwidrigen Schaumgummis und die Verwendung obenbeschriebener Mittel zur Erhöhung der Glimmwidrigkeit von Schaumgummi.

EP 0 844 273 A2

**Beschreibung**

Die Erfindung betrifft glimmwidrigen Schaumgummi, Verfahren zu seiner Herstellung und seine Verwendung.

Schaumgummi ist allgemein bekannt, siehe z.B. Römpp, Chemielexikon, 9. Aufl. 1995, S. 4015, oder DE-A 23 07 804. Es handelt sich um einen üblicherweise vulkanisierten Latexschaum auf Basis von natürlichen oder synthetischen Polymeren, der aufgrund seiner Zellstruktur eine gute Elastizität und eine hohe Wärmeisolation bei geringem Gewicht, vorzugsweise einer Dichte von 50 bis 120 g/cm$^3$, aufweist.

Schaumgummi wird üblicherweise für Verpackungen, Einlegsohlen und insbesondere als Polstermaterial in der Möbel- und Autoindustrie verwendet. Eine wesentliche Forderung für Produkte aus Schaumgummi, wie. z.B. Matratzen, ist die Glimmwidrigkeit. Die Neigung des Produktes zum Glimmen soll möglichst gering sein. Der Zusatz von bekannten Glimm- bzw. Flammschutzmitteln, wie Aluminiumtrihydrat, Antimontrioxid, brom- oder chlorhaltigen Substanzen oder Phosphatderivaten führt jedoch zu Nachteilen. Diese Substanzen sind großteils giftig und verschlechtern die Eigenschaften des Schaumgummis, z.B. seine Elastizität, wenn sie in Mengen zugegeben werden, die die Glimmwidrigkeit wirksam verbessern.

Der vorliegenden Erfindung liegt daher die Aufgabe zugrunde, glimmwidrigen Schaumgummi mit akzeptablen mechanischen Eigenschaften bereitzustellen. Aufgabe der Erfindung ist weiterhin die Bereitstellung einer glimmwidrigen Matratze.

Überraschenderweise wurde gefunden, daß man durch Zusatz geringer Mengen eines Mittels, das die Grenzfläche Gas/flüssiges Dispergiermedium im Schaum destabilisiert, einen Schaumgummi mit sehr hoher Glimmwidrigkeit und guten mechanischen Eigenschaften erhalten kann.

Gegenstand der Erfindung ist somit ein glimmwidriger Schaumgummi, der erhältlich ist durch Aufschäumen einer Polymerisatdispersion und Formen, Gelieren und Vernetzen des erhaltenen Schaums, wobei man während des Aufschäumens, Formens und/oder Gelierens ein die Grenzfläche Gas/flüssiges Dispergiermedium destabilisierendes Mittel in einer Menge von < 100 ppm, bezogen auf das Polymerisattrockengewicht, einarbeitet.

Vorteilhafte Wirkungen von Entschäumerzugaben sind in anderem Zusammenhang bereits beschrieben worden: So ist aus DE-B 12 97 067 bekannt, Teppichgewebe vor der Beschichtung mit füllstoffhaltigem Latex mit grossen Mengen an schaumzerstörenden Substanzen, die auch identisch mit dem Schaummittel des Latex sein können zu behandeln. Mit dieser Maßnahme soll die Haftung zwischen Latexschaum und Gewebe verbessert werden.

In GB-B 1239 554 wird beschrieben, daß der Einsatz von 100 bis 50 000 ppm eines Polysiloxans in einem niedrigdichten Schaum die Zellstruktur und die Oberflächeneigenschaften des Schaums verbessert und das Einarbeiten von Füllstoffen deutlich vereinfacht.

Der dem Schaumgummi zugrundeliegende Latex basiert bevorzugt auf synthetischem Kautschuk, insbesondere auf Styrolbutadiencopolymeren, Nitril-, Diolefin-, Acrylat-, Vinyl-, Vinyliden- oder Vinylesterpolymeren.

Ein typisches Styrolbutadiencopolymer enthält von 15 bis 40, bevorzugt 25 bis 35 Gew.-%, bezogen auf das Copolymere, einer Mischung, die von 100 bis 50, vorzugsweise nicht weniger als 70 Gew.-%, bezogen auf die Mischung, eines vinylaromatischen 8 bis 12 C-Atome enthaltenden Monomeren enthält, das unsubstituiert oder durch Alkylradikale mit 1 bis 4 C-Atomen, Chlor- oder Bromatome substituiert sein kann und bis zu 50, bevorzugt nicht mehr als 30 Gew.-%, bezogen auf die Mischung, an Alkenylnitrilen mit 3 bis 6 C-Atomen und/oder Alkylestern der Acryl- oder Methacrylsäure mit 1 bis 3 C-Atomen. Das Styrolbutadiencopolymer enthält weiterhin von 85 bis 60, bevorzugt 75 bis 65 Gew.-%, bezogen auf das Copolymer, an konjugierten 4 bis 6 C-Atome enthaltenden Dienmonomeren, die unsubstituiert oder durch Chlor substituiert sein können.

Einige Latices sind gefrieragglomerierte Styrolbutadienlatices aus 20 bis 35 Gew.-% Styrol und 80 bis 65 Gew.-% Butadien oder gefrieragglomerierte Polybutadienlatices. Diese Latices können gegebenenfalls verstärkt sein mit bis zu 25 Gew.-% Polystyrol, bezogen auf den Latex, carboxyliertem Styrolbutadienkautschuklatex oder PVC. Das Polymere des Latex kann kleine Gehalte an funktionellen Gruppen aufweisen. Es handelt sich dabei um bis zu 10 Gew.-%, bezogen auf das Polymere, von Monomeren, wie $C_3$-$C_6$-ethylenisch ungesättigte Aldehyde, $C_1$-$C_8$-Alkyl- oder -Hydroxyalkylester der ethylenisch ungesättigten Carbonsäuren mit 3 bis 6 C-Atomen, Amide von ethylenisch ungesättigten Carbonsäuren mit 3 bis 6 C-Atomen, die unsubstituiert oder am Stickstoff durch $C_1$-$C_8$-Alkylradikale und/oder $C_1$-$C_8$-Hydroxyalkylradikale substituiert sein können.

Als Beispiele für vinylaromatische Monomere seien Styrol und $\alpha$-Methylstyrol genannt. Alkenylnitrile sind beispielhaft Acrylnitril oder Methacrylnitril. Beispiele für $C_4$-$C_6$-konjugierte Dienmonomere sind Butadien, Isopren und Chloropren. Bevorzugte Alkylester sind Methylacrylat und Methylmethacrylat. Ein Beispiel eines $C_3$-$C_6$-ethylenisch ungesättigten Aldehyds ist Acrolein. Beispiele für $C_1$-$C_8$-Alkyl- oder -Hydroxyalkylester der $C_3$-$C_6$-ethylenisch ungesättigten Carbonsäuren sind Methacrylat, Methylmethacrylat, Ethylacrylat, Ethylmethacrylat, Hydroxyethylacrylat und Ethylhexylacrylat. Als Amide vom $C_3$-$C_6$-ethylenisch ungesättigten Carbonsäuren seien Acrylamid, Methacrylamid, n-Methylolacrylamid und n-Methylolmethacrylamid genannt.

Ein typisches Nitrilpolymer enthält 20 bis 40, bevorzugt 25 bis 35 Gew.-%, bezogen auf das Polymere, $C_3$-$C_6$-Alkenylnitril und von 80 bis 60, bevorzugt 65 bis 75 Gew.-%, bezogen auf das Polymere, einer Mischung von wenigstens 85,

2

bevorzugt mehr als 90 Gew.-%, bezogen auf die Mischung, eines Konjugierten Dienmonomeren mit 4 bis 6 C-Atomen, das unsubstituiert oder durch Chlor- oder Bromatome substituiert sein kann und bis zu 15, bevorzugt weniger als 10 Gew.-%, bezogen auf die Mischung, an vinylaromatischen Monomeren mit 8 bis 12 C-Atomen, die unsubstituiert oder durch $C_1$-$C_4$-Alkylradikale, Chlor oder Brom substituiert sein können und/oder von $C_1$-$C_3$-Alkylestern der Acryl- oder Methacrylsäure. Gegebenenfalls kann das Nitrilpolymere bis zu 10 Gew.-%, bezogen auf das Polymere, ein oder mehrere der obengenannten funktionellen Monomeren enthalten.

Ein typisches Dienpolymer enthält wenigstens 90 Gew.-%, bezogen auf das Polymere, eines oder mehrerer konjugierter Dienmonomere mit 4 bis 6 C-Atomen, die unsubstituiert oder durch Chlor oder Bromatome substituiert sein können und bis zu 10 Gew.-%, bezogen auf das Polymere, eines oder mehrerer der obengenannten funktionellen Monomeren.

Das Acrylatpolymer enthält üblicherweise wenigsten 60, bevorzugt mehr als 80 Gew.-%, bezogen auf das Polymere, von $C_1$-$C_8$-Alkyl- oder Hydroxyalkylestern von ethylenisch ungesättigten Carbonsäuren mit 3 bis 6 C-Atomen, bevorzugt Acryl- oder Methacrylsäure und weniger als 40, bevorzugt weniger als 20 Gew.-%, bezogen auf das Polymere, von einem oder mehreren der obengenannten funktionellen Monomere, die sich von den $C_1$-$C_8$-Alkyl- oder Hydroxyalkylestern der ethylenisch ungesättigten Carbonsäuren mit 3 bis 6 C-Atomen unterscheiden.

Als Vinyl- oder Vinylidenpolymer seien Co- oder Homopolymere von Vinyl- oder Vinylidenchlorid genannt, die bis zu 10 Gew.-%, bezogen auf das Polymere, eines oder mehrerer der oben beschriebenen funktionellen Monomere enthalten können.

Ein Vinylesterpolymer ist beispielsweise ein Copolymer aus wenigstens 60, bevorzugt 75 bis 90 Gew.-%, bezogen auf das Polymere, eines $C_2$-$C_6$-Vinylesters einer $C_1$-$C_8$-gesättigten Carbonsäure und bis zu 40, bevorzugt von 0 bis 25 Gew.-%, bezogen auf das Polymere, eines $C_2$-$C_3$-Olefins. Gegebenenfalls kann das Polymere bis zu 10 Gew.-%, bezogen auf das Polymere, eines oder mehrerer der obengenannten fuktionellen Monomeren enthalten. Ein Vinylester von gesättigten Carbonsäuren ist Vinylacetat. Als Beispiele für Olefine seien Ethylen und Propylen genannt.

Gewünschtenfalls kann der verwendete Latex einen zur Verstärkung dienenden Latex eines nicht kautschukartigen Polymeren enthalten, z.B. einen solchen aus Polystyrol oder sogenannten Hochstyrollatex. Erfindungsgemäß werden jedoch in besonders vorteilhafter Weise unverstärkte Kautschuklatices, insbesondere Styrolbutadienlatices mit einem Polymer aus 25 bis 35 Gew.-% Styrol und 65 bis 75 Gew.-% Butadien verwendet.

Die Latices enthalten neben den Polymeren bekannterweise im allgemeinen 30 bis 45 Gew.-% Wasser und bis zu 3 Gew.-% übliche Hilfsstoffe, wie nieder- oder hochmolekulare Tenside.

Wässrige Latices in dieser Herstellung sind allgemein bekannt, siehe z.B. Encyclopedia of Polymer Science and Engineering, John Wiley & Sons, New York, Band 8 (1987), Seite 647 ff, oder Ullmann Enzyklopädie der Technischen Chemie, Verlag Chemie Weinheim, 4. Auflage, Band 19, Seite 132 ff.

Der Latex wird zur Schaumherstellung üblicherweise compoundiert. Dazu werden dem Kautschuklatex in der Regel Vernetzungs- oder Vulkanisationsmittel zugesetzt. Derartige Mittel sind dem Fachmann bekannt, z.B. aus E.W.Madge 'Latex Foam Rubber', Maclaren & Sons, 1962. In der Regel wird ein Vernetzungssystem auf Schwefelbasis verwendet, wobei der Schwefelgehalt in der Regel 2 bis 3 Gew.-% (Trockengewicht) beträgt. Beschleuniger, z.B. Dithiocarbamat, Xanthat, Thiazol oder Thiuram, werden in der Regel ebenfalls zugesetzt. Zinkoxid wird in der Regel in Mengen von 1 bis 10 Gew.-% als Aktivator zugesetzt bei der Compoundier- oder Schäumstufe. Gegebenenfalls sind Antioxidantien und Füllstoffe verwendbar.

Schaumgummi wird üblicherweise dadurch hergestellt, daß ein Kautschuklatex belüftet und die erhaltene geschäumte Dispersion geformt und anschliessend vernetzt wird, wobei der Begriff "formen" auch das Ausbreiten mit einschließt. Schaumgummi gemäß der Erfindung ist somit sowohl nach Formverfahren, z.B. den sogenannten Dunlopoder Talalay-Verfahren, als auch nach dem Ausbreitverfahren herstellbar. Dabei entsteht beispielsweise ein Formschaum, wenn der geschäumte Latex in Formen gegossen und anschliessend vulkanisiert wird.

Bevorzugt ist das Dunlop-Schaum-Schlagverfahren. Eine vulkanisationsfähig compoundierte Latexmischung wird zu einem stabilen Schaum, dem sogenannten vorgeschäumten Latex, von ca. 8 bis 12-fachem Volumen der ursprünglichen Latexmischung aufgeschlagen. Zum Schaum gibt man eine Lösung sensibilisierend wirkender Verbindungen, sogenannte Geliermittel, und füllt ihn in eine verschließbare Form. Je nach der Menge des zugesetzten Sensibilisierungsmittels bleibt der Schaum noch ca. 5 bis 10 Minuten flüssig, bevor er geliert und koaguliert. Er wird noch in der Form durch Hitzebehandlung mit Dampf oder beispielsweise heißem Wasser vulkanisiert. Beim anschliessenden Waschen und Trocknen kann eine Schrumpfung von ca. 5 % eintreten.

Die Verfahrensstufen des Schäumens, Gelierens oder Härtens, Trocknens und Vernetzens sind dem Fachmann ebenso wie die hierzu verwendbaren Mittel bekannt. Werden Geliermittel verwendet, so sind solche des hitzeempfindlichen oder mit Verzögerung arbeitenden Typs geeignet. Typische geeignete derartige Mittel sind wohlbekannt und werden ebenso wie die Verfahren, in denen sie üblicherweise eingesetzt werden, u.a. in dem angegebenen Buch von Madge 'Latex Foam Rubber' beschrieben. In der Regel werden mit Verzögerung arbeitende Gelierungsmittel im Dunlop-Verfahren verwendet, wohingegen hitzeempfindliche Mittel in Ausbreitungsschäumen und Flachwalzwerkstoffen Anwendung finden. Schaumgummi ist jedoch bekanntlich auch nach Verfahren herstellbar, die keine Geliermittel erfordern, nämlich nach dem sogenannten Nichtgelverfahren, zu dessen Durchführung der Kautschukschaum durch Trocknung gehärtet wird, d.h. durch Entfernen der wässrigen Phase bei erhöhter Temperatur, z.B. bei bis zu 200°C. Dies setzt jedoch voraus, daß genügend Stabilisierungsmittel vorhanden ist, um die Schaumstruktur aufrechtzuerhalten.

Die Eigenschaften des fertiggestellten Schaumes können modifiziert sein durch Compoundieren des Latex mit Füllstoffen, z.B. Ton, Kreide, Carbonate (wie Calciumcarbonat), Silikate (wie Talkum), Glimmer, Kieselerde, Calcium- und Bariumsulfat, Aluminiumhydroxid, Holzmehl, Ruß, Cellulosepulver oder pulverförmige Kunststoffe, wie z.B. PVC. Es hat sich jedoch in vielen Fällen als günstig herausgestellt, ohne Füllstoffe zu arbeiten.

Der erfindungsgemäße Schaumgummi wird unter Zugabe von 1 bis 100, bevorzugt 60 bis 80 ppm eines Mittels, das die Grenzfläche Gas/flüssiges Dispergiermedium im Schaum destabilisiert, hergestellt. Geeignete Mittel sind z.B. Entschäumer, die allgemein bekannt sind, siehe Ullmanns Enzyklopädie der Technischen Chemie, Verlag Chemie Weinheim, 4. Aufl., Bd. 20, S. 411 ff oder Encyclopedia of Polymer Science and Engineering, Bd. 2 (1985), S. 59 ff. Es kann sich um Kohlenwasserstoffe, Polyether, Fluorkohlenwasserstofföle, Polyalkylenglykole, Ester von Fettsäuren, Bernsteinsäure oder Phosphorsäure mit Alkoholen mit mehr als 10 C-Atomen oder mit Polyalkylenglykolen, oder bevorzugt um Silikonentschäumer handeln. Besonders bevorzugt sind Polydialkylsiloxane und deren Copolymere mit Polyalkylenglykolen. Beispiele sind Polydimethylsiloxan und Polytrifluorpropylmethylsiloxan.

Das oben beschriebene Mittel kann der Polymerisationsmischung vor oder während der Polymerisation zugesetzt, vor der Schaumherstellung in den Latex eingemischt oder, in einer bevorzugten Verfahrensform, dem geschäumten Latex zugemischt werden.

Nach bisherigen Erkenntnissen kann die Glimmschutzwirkung des Zusatzes versuchsweise mit dem folgenden Mechanismus erklärt werden, ohne die Erfindung darauf einschränken zu wollen. Das zugesetzte Mittel vergröbert offenbar die Blasen des Schaumgummis. Eine brennende Zigarette, die auf dieses Schaumgummi gelegt wird, hat daher nur wenige Kontaktpunkte mit dem Polymermaterial, so daß die Wahrscheinlichkeit der Entzündung des Gummis verringert wird. Darüber hinaus bilden die großen Blasen zwischen den Kontaktpunkten gute Isolatoren, so daß ein Weiterglimmen erschwert wird.

Der erfindungsgemäße Schaumgummi hat daher eine sehr hohe Glimmwidrigkeit bei guten mechanischen Eigenschaften, wie Dehnbarkeit, Komprimierbarkeit und Elastizität. Unerwarteterweise liegt die Härte um 25 bis 30 % höher als bei nach der gleichen Standardrezeptur hergestelltem Schaumgummi ohne entschäumenden Zusatz.

Der erfindungsgemäße Schaumgummi ist zur Herstellung von glimmwidrigen Formteilen, insbesondere von glimmwidrigen Matratzen geeignet. Vorzugsweise setzt man zur Herstellung glimmwidriger Matratzen Entschäumermengen ≤ 300 ppm, insbesondere ≤ 100 ppm, bezogen auf das Polymerisattrockengewicht, ein.

Die nun folgenden Beispiele erläutern die Erfindung, ohne sie jedoch darauf einzuschränken:

**Beispiele**

Es wurde folgende Standardrezeptur verwendet:

|  | Gew.-Teile (trocken) |
|---|---|
| wässriger Latex eines Copolymerisats aus 70 Gew.-% Butadien und 30 Gew.-% Styrol mit einem Feststoffgehalt von 64,5 Gew.-% | 100 |
| Schwefel | 2,25 |
| Zink-2-Mercaptobenzothiazol | 1,00 |
| Zinkdiethyldithiocarbamat | 1,00 |
| Alterungsschutzmittel[1] | 1,00 |
| Diphenylguanidine | 0,25 |
| Zinkoxid | 3,00 |
| Natriumsilicofluorid | 3,40 |
| Entschäumer | siehe Tabelle 1 |

[1] sterisch gehindertes Phenol, butyliertes Produkt von p-Kresol und Dicyclopentadien; von der Firma Goodyear als Wingstay® L vertrieben.

Als Entschäumer wurde in den Beispielen 1 bis 4 eine Polysiloxan enthaltende Emulsion eingesetzt, die von der Firma Goldschmidt AG als Polymekon® 50 vertrieben wird. In Beispiel 5 wurde ein Methylpolysiloxan der Firma Henkel (Antifoam RD), in Beispiel 6 ein Fettalkoholester in Mineralöl der Firma BASF (Entschäumer TP), in Beispiel 7 ein Gemisch aus Fettsäureester, Ethylen-/Propylenoxidaddukt und Mineralöl der Firma Henkel (Agitan 218) und in Beispiel 8 ein Dimethylpolysiloxan (Dehysan S 1500) verwendet.

Tabelle 1 gibt die zugesetzten Entschäumermengen in ppm der Latextrockenmasse an.

Tabelle 1

|  | Entschäumertyp | Entschäumermenge (ppm) |
|---|---|---|
| Vergleichstest V1 | - | 0 |
| Beispiel 1.1 und 1.2 | Polymekon®50 | 5 |
| Beispiel 2.1 und 2.2 | Polymekon®50 | 10 |
| Beispiel 3.1 und 3.2 | Polymekon®50 | 20 |
| Beispiel 3.3 und 3.4 | Polymekon®50 | 40 |
| Beispiel 3.5 und 3.6 | Polymekon®50 | 60 |
| Beispiel 3.7 und 3.8 | Polymekon®50 | 80 |
| Beispiel 4.1 bis 4.5 | Polymekon®50 | 100 |
| Beispiel 5 | Antifoam RD | 100 |
| Beispiel 6 | Entschäumer TP | 100 |
| Beispiel 7 | Agitan 218 | 100 |
| Beispiel 8 | Dehysan S1500 | 100 |

Der Latex wurde mit den genannten Hilfsstoffen in folgender Weise compoundiert und aufgeschäumt: Eine wässrige Latexdispersion mit einem Latextrockengehalt von 1000 g wurde in obenbeschriebener Weise aufgeschlagen. Bei ca. 90 % des zu erreichenden Volumens an Latexschaum (Aufschlagzeit 10 bis 13 Minuten) wurden die angegebenen Mengen an Schwefel, Beschleuniger, Entschäumer und Alterungsschutzmittel unter Aufschlagen zugegeben, nach weiterer 2 Minuten wurde die benötigte Menge an Na-silicofluorid (NSF) zugegeben. 2 Minuten nach der NSF-Zugabe wurde der Schaum in eine präparierte Plattenform gegossen und geliert. Gelierungs- und Vergröbungszeit wurden aufgezeichnet. Nach dem Gelieren wurden die entstandenen Platten im Wasserdampfofen 30 Minuten bei 100°C vulkanisiert. Anschliessend wurden die vulkanisierten Muster in der Zentrifuge mit strömendem Wasser 5 Minuten lang gewaschen und danach zentrifugiert. Die fertigen Muster wurden 16 Stunden lang bei 80°C im Trockenschrank getrocknet und danach mindestens 72 Stunden lang bei 21°C und 53 % relativer Luftfeuchtigkeit konditioniert. Aus dem fertigen Schaum wurden Testkörper hergestellt, mit denen die folgenden Tests durchgeführt wurden:

1. Härte nach NEN 3118
2. Vertikaler Schrumpf nach ISO 845
3. Zugfestigkeit und Bruchdehnung nach ISO 1798
4. Druckverformungsrest nach NEN 3118
5. Rohdichte
6. Zigarettenglimmtest nach BS 6807 (1986), Paragraph 11.2

Die nach dem Glimmtest entstandene relative Resttiefe (RRT) ist nach folgender Formel berechnet:

$$\frac{\text{Musterdicke-Glimmtiefe}}{\text{Musterdicke}} \times 100\,\% = \text{RRT}$$

Die Ergebnisse sind in Tabelle 2 aufgeführt. Es zeigte sich, daß der Testkörper des Vergleichsversuchs V1, dem kein Entschäumer zugefügt worden war, den Anforderungen des Zigaretten-Glimmtests nicht genügte, während die Testkörper des Beispiels 3, denen Entschäumerkonzentrationen von 40 bis 80 ppm zugefügt worden waren, den Anforderungen genügten.

Tabelle 2

| Bsp. | Ent-schäu-mer-menge | Schaum-struk-tur | Zi-gar.-Test | Rela-tive Rest-tiefe | Vertika-ler Schrumpf | Dichte | Härte | Zugfe-stig-keit | Bruch-deh-nung | Druck-ver-form. rest | Auf-schlag-zeit bis NSF-Zu-gabe | NSF-Menge | Ge-lier-zeit |
|---|---|---|---|---|---|---|---|---|---|---|---|---|---|
| Nr. | (ppm) | f) | g) | (%) | (%) | (kg/ m$^3$) | (g/ cm$^2$) | (kPa) | (%) | (%) | (min) | (Teile) | (min) |
| V1a) | 0 | F | F | 0 | 25 | 97 | 66,9 | 91 | 199 | 16,7 | 12 | 4 | 10 |
| 1.1 | 5 | F | F | 0 | 25 | 98 | 68,4 | 93 | 159 | 12,3 | 13 | 4 | 10 |
| 1.2 | 5 | M2 | F | 0 | 34 | 115 | 66,5 | 98 | 161 | 11,9 | 12,5 | 3 | 11 |
| 2.1 | 10 | M2 | F | 0 | 26 | 100 | 78,4 | 90 | 146 | 8,5 | 13 | 4 | 10 |
| 2.2 | 10 | M3 | F | 0 | 31 | 102 | 69,1 | 89 | 157 | 10,8 | 12 | 5 | 11 |
| 3.1 | 20 | M1 | F | 0 | 23 | 100 | 70,9 | 79 | 136 | 7,7 | 13 | 4 | 10 |
| 3.2 | 20 | M3 | F | 0 | 32 | 112 | 77,6 | 77 | 113 | 12,8 | 12 | 5 | 11 |
| 3.3 | 40 | M2 | P | 43 | 26 | 101 | 74,4 | 64 | 111 | 7,4 | 13 | 4 | 10 |
| 3.4 | 40 | M3 | P | 48 | 31 | 103 | 75,7 | 66 | 114 | 10,6 | 12 | 5 | 10 |
| 3.4 | 60 | M3 | P | 66 | 23 | 98 | 76,2 | 62 | 105 | 10,6 | 13 | 4 | 9 |
| 3.6 | 60 | G1 | P | 61 | 29 | 102 | 67,4 | 49 | 100 | 10,5 | 12 | 5 | 10 |
| 3.7 | 80 | M3 | P | 54 | 24 | 100 | 83,2 | 65 | 102 | 10,6 | 11,5 | 4 | 8 |
| 3.8 | 80 | G1 | P | 62 | 29 | 103 | 73,4 | 56 | 112 | 10,2 | 12 | 5 | 10 |
| 4.1 | 100 | M3 | P | 31 | 26 | 106 | 79,4 | 64 | 112 | 10,5 | 12 | 4 | 9 |
| 4.2 | 100 | G1 | P | 62 | 27 | 102 | 70,4 | 57 | 132 | 11,9 | 12 | 5 | 12 |
| 4.3 | 100 | G1 | P | 55 | 33 | 123 | 76,8 | 66 | 90 | 9,9 | 12 | 5 | 11 |
| 4.4 | 100 | G1 | P | 61 | 29 | 114 | 74,9 | 58 | 97 | 11,4 | 13,5 | 5 | 10 |
| 4.5 | 100 | G2 | P | 70 | 31 | 112 | 75,0 | 49 | 87 | 11,9 | 13 | 5 | 10 |
| 5 | 100b) | G1 | P | 58 | 21 | 96 | 70,4 | 56 | 98 | 11,7 | 13 | 4 | 9 |
| 6 | 100c) | F | F | 0 | 25 | 103 | 70,4 | 96 | 180 | 10,1 | 12 | 4 | 9 |
| 7 | 100d) | F | F | 0 | 25 | 100 | 64,7 | 98 | 213 | 11,6 | 12 | 4 | 9,5 |
| 8 | 100e) | M1 | F | 0 | 34 | 109 | 72,1 | 100 | 151 | 9,9 | 13 | 4 | 11 |

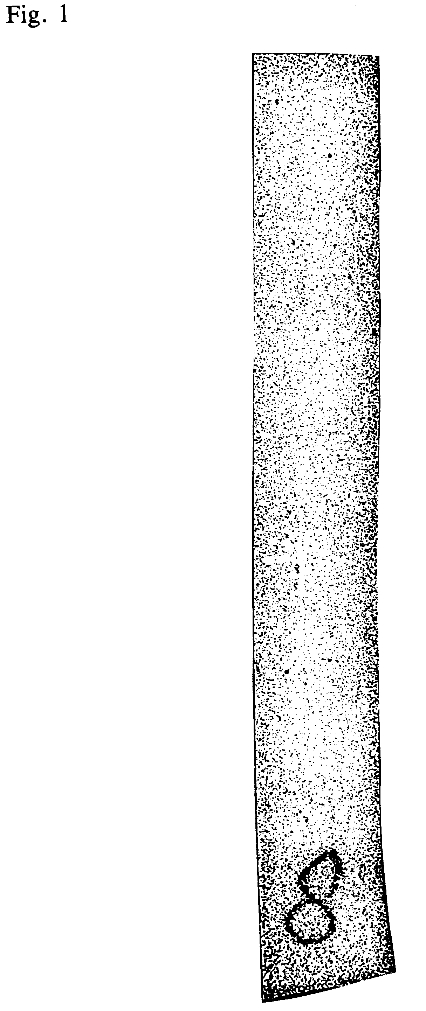

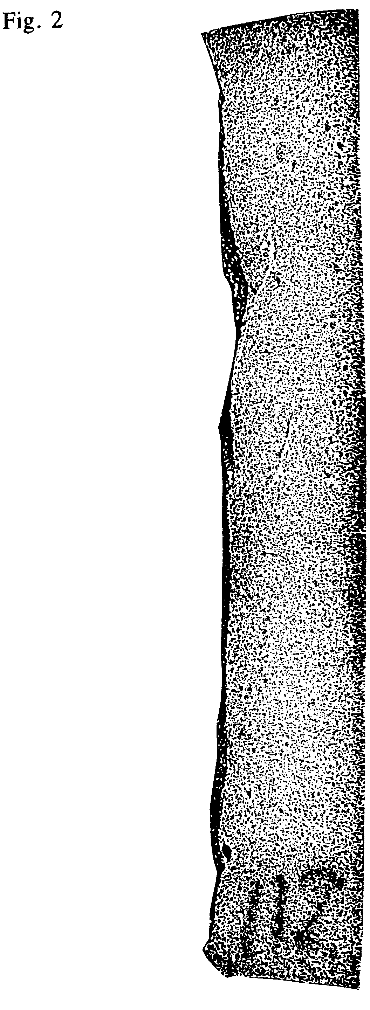

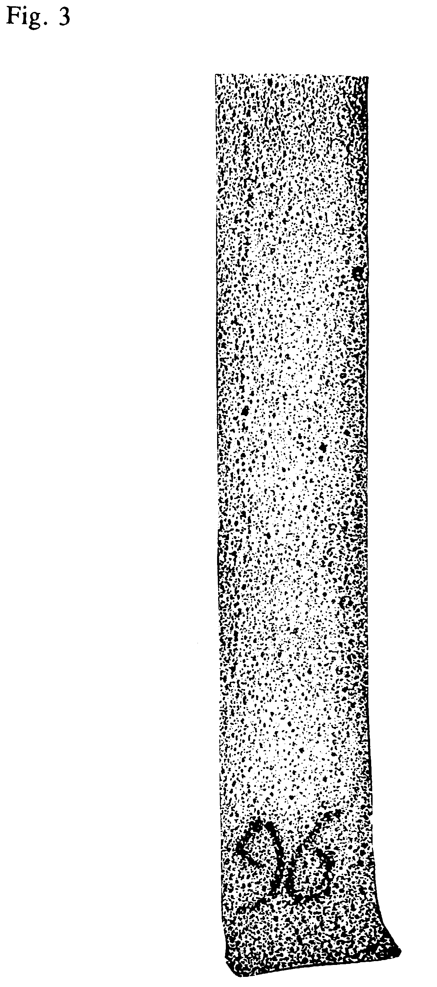

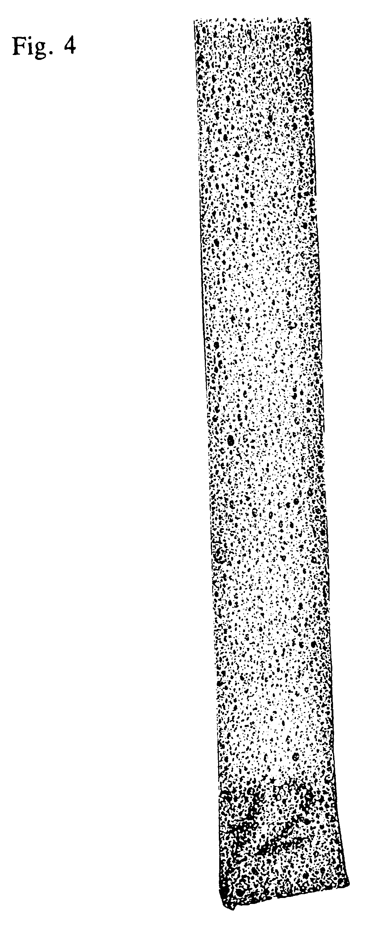

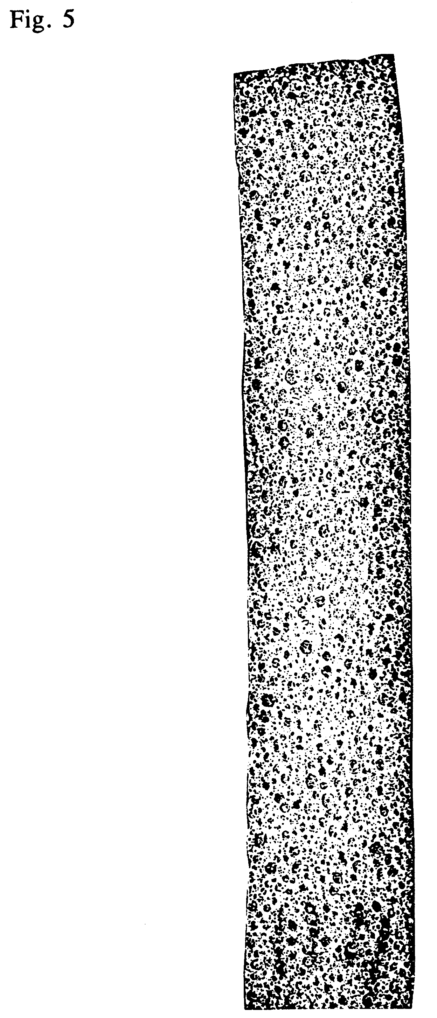

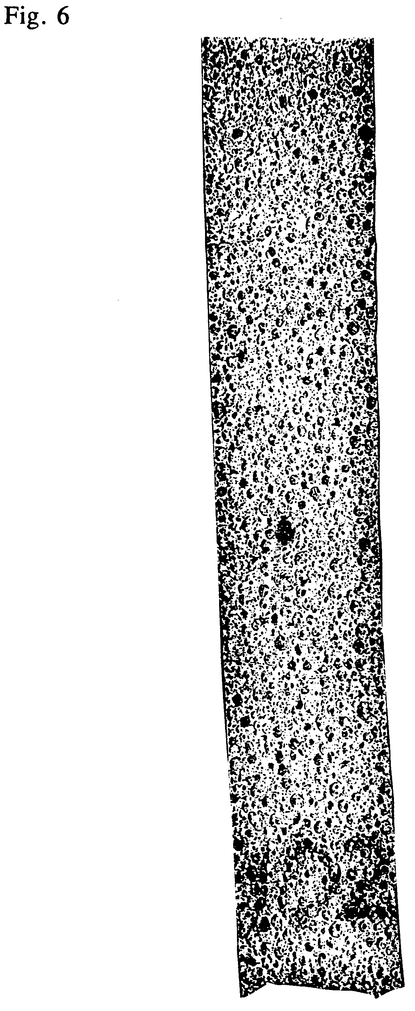

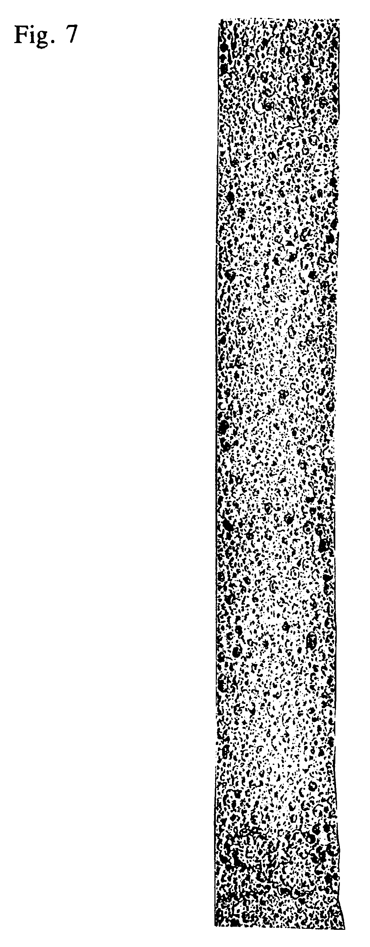

```
a)   Vergleichstest V1
b)   Antifoam RD
c)   Entschäumer TP
d)   Agitan 218
e)   Dehysan S1500
f)   s. Figuren 1 bis 7:
     F = fein
     M1 - M3 = mittel grob 1, 2 und 3
     G1 - G3 = grob 1, 2 und 3
g)   F = "fails", besteht den Test nicht
     P = "passes", besteht den Test
```

**Patentansprüche**

1. Glimmwidriger Schaumgummi, erhältlich durch Aufschäumen einer Polymerisatdispersion und Formen, Gelieren und Vernetzen des erhaltenen Schaums, wobei man während des Aufschäumens, Formens und/oder Gelierens ein die Grenzfläche Gas/flüssiges Dispergiermedium destabilisierendes Mittel in einer Menge von < 100 ppm, bezogen auf das Polymerisattrockengewicht, einarbeitet.

2. Glimmwidriger Schaumgummi nach Anspruch 1, wobei das die Grenzfläche Gas/flüssiges Dispergiermedium destabilisierende Mittel in einer Menge von ≤ 80 ppm, insbesondere ≤ 60 ppm, bezogen auf das Polymerisattrockengewicht, eingearbeitet wird.

3. Glimmwidriger Schaumgummi nach Anspruch 1 oder 2, wobei das die Grenzfläche Gas/flüssiges Dispergiermedium destabilisierende Mittel dem geschäumten Latex zugemischt wird.

4. Glimmwidriger Schaumgummi nach einem der Ansprüche 1 bis 3, wobei das die Grenzfläche Gas/flüssiges Dispergiermedium destabilisierende Mittel ein Silikonentschäumer ist.

5. Glimmwidriger Schaumgummi nach einem der Ansprüche 1 bis 4, wobei die aufzuschäumende Polymerisatdispersion ein wässriger Latex eines Synthesekautschuks ist.

6. Glimmwidriger Schaumgummi nach Anspruch 5, wobei der Synthesekautschuk ein Copolymerisat auf Basis von vinylaromatischen Monomeren und konjugierten Dienmonomeren ist.

7. Glimmwidriger Schaumgummi nach einem der Ansprüche 1 bis 6, wobei man den Schaum durch Aufschlagen einer vulkanisationsfähig compoundierten Latexmischung auf das 8- bis 12-fache Volumen der ursprünglichen Latexmischung herstellt.

8. Glimmwidriger Schaumgummi nach einem der Ansprüche 1 bis 7, der frei von Füllstoffen ist.

9. Formteil aus einem glimmwidrigen Schaumgummi nach einem der Ansprüche 1 bis 8.

10. Formteil nach Anspruch 9, das in Form einer Matratze vorliegt.

11. Glimmwidrige Schaumgummimatratze aus Schaumgummi erhältlich durch Aufschäumen einer Polymerisatdispersion und Formen, Gelieren und Vernetzen des erhaltenen Schaums, wobei man während des Aufschäumens, Formens und/oder Gelierens ein die Grenzfläche Gas/flüssiges Dispergiermedium destabilisierendes Mittel in einer Menge von ≤ 300 ppm, bezogen auf das Polymerisattrockengewicht, einarbeitet.

12. Verfahren zur Herstellung von glimmwidrigem Schaumgummi nach einem der Ansprüche 1 bis 8, dadurch gekennzeichnet, daß man eine Polymerisatdispersion aufschäumt und formt und den erhaltenen Schaum geliert und vernetzt, wobei man während des Aufschäumens, Formens und/oder Gelierens ein die Grenzfläche Gas/flüssiges Dispergiermedium destabilisierendes Mittel in einer Menge von < 100 ppm, bezogen auf das Polymerisattrockengewicht, einarbeitet.

13. Verwendung eines die Grenzfläche Gas/flüssiges Dispergiermedium destabilisierenden Mittels zur Erhöhung der Glimmwidrigkeit von Schaumgummi.

Fig. 1

Fig. 2

Fig. 3

Fig. 4

Fig. 5

Fig. 6

Fig. 7